# EUROPÄISCHE PATENTANMELDUNG

(11) **EP 2 341 039 A1**
(43) Veröffentlichungstag der Anmeldung: **06.07.2011**
(21) Anmeldenummer: 09180738.8
(22) Anmeldetag: 24.12.2009
(51) Int. Cl.: C04B 28/14, C04B 40/00

(54) **Tonhaltiger Gips**

(71) Anmelder: Sika Technology AG, 6340 Baar (CH)
(72) Erfinder: Hampel, Christina, 8102, Oberengstringen (CH); Al Shemari, Jabbar, 8052, Zürich (CH); Zimmermann, Jörg, 8046, Zürich (CH); Flatt, Robert, 8706, Feldmeilen (CH)
(74) Vertreter: Isler, Jörg

(57) **Zusammenfassung**

Die vorliegende Erfindung betrifft die Verwendung von Additiven, die ausgewählt sind aus primären, sekundären und tertiären Alkylaminen und quartären Alkylammoniumverbindungen zur Verbesserung der Verarbeitbarkeit von tonhaltigen Gipszusammensetzungen, die Kammpolymere enthalten. Die Erfindung betrifft auch tonhaltige Gipszusammensetzungen, Dispergiermittel, Verfahren zur Herstellung tonhaltiger Gipszusammensetzungen sowie Formkörper, die aus den Gipszusammensetzungen herstellbar sind.

## Beschreibung

### Technisches Gebiet

Die Erfindung betrifft die Verwendung von Additiven, die ausgewählt sind aus primären, sekundären und tertiären Alkylaminen und quartären Alkylammoniumverbindungen zur Verbesserung der Verarbeitbarkeit von tonhaltigen Gipszusammensetzungen, die Kammpolymere enthalten. Die Erfindung betrifft auch tonhaltige Gipszusammensetzungen, Dispergiermittel, Verfahren zur Herstellung tonhaltiger Gipszusammensetzungen sowie Formkörper, die aus den Gipszusammensetzungen herstellbar sind.

### Stand der Technik

Gips ist ein wichtiger Baustoff, der für eine Vielzahl von Anwendungen eingesetzt wird. Beispielsweise werden Gipszubereitungen zur Herstellung von Gipsplatten, für Spachtelmassen, für Wandputze oder zur Herstellung von Estrichen eingesetzt. Gips ist ein Synonym für Calciumsulfat. Dieses kann je nach Herstellungsverfahren in verschiedenen Modifikationen vorliegen, die sich durch den Gehalt an Kristallwasser und durch die kristalline Form unterscheiden.

Technisch wird das Vermögen von Gips genutzt, dass durch Erhitzen (Brennen) teilweise oder vollständig entfernte Kristallwasser bei Zugabe von Wasser wieder aufzunehmen und dabei abzubinden. Da für die Verarbeitbarkeit mehr Wasser benötigt wird, als für das Abbinden notwendig ist, muss das Ueberschusswasser (bis zu 65%) wieder entfernt werden. Eine solche feuchte Gipszusammensetzung kann geformt werden.

Bei der Verarbeitung von Gips besteht ein Bedürfnis, den Wassergehalt zu verringern. Dadurch wird der abgebundene Gips weniger porös und stabiler. Bei geringerem Wassergehalt ist ein kürzerer Trockenvorgang ausreichend.

Gemäß dem Stand der Technik wird eine Wasserreduzierung erreicht, indem dem Gips "Verflüssiger" zugesetzt werden. Geeignet sind Polymere, insbesondere Kammpolymere, bei denen über Ester/Amid und/oder Ethergruppen Seitenketten an eine Hauptkette angebunden sind. Bei Zusatz solcher Kammpolymere zu Gipszusammensetzungen ist ein reduzierter Wasseranteil erforderlich, um die zur Verarbeitung notwendige Viskosität zu erreichen.

Im Stand der Technik besteht das Problem, dass Kammpolymere als Verflüssiger nicht oder nur wenig effektiv sind, wenn als Gipskomponente ein tonhaltiger Gips eingesetzt wird. Bei Zusatz von Kammpolymeren zu tonfreiem Gips nimmt die Viskosität ab und damit steigt die Verarbeitbarkeit wässriger Gipszusammensetzungen. Bei tonhaltigem Gips ist dieses Verhalten kaum oder nicht vorhanden. Die Kammpolymere bewirken also bei tonhaltigen Gipszusammensetzungen nicht den gewünschten Verflüssigungseffekt.

Zur Lösung dieses Problems wird in der WO 2009/068899 vorgeschlagen, neben einem Kammpolymer ein basisches wasserlösliches Polymer zuzugeben, das eine besondere Affinität für Ton hat. Dieses Verfahren weist den Nachteil auf, dass neben dem Kammpolymer ein weiteres komplexes Polymer zu der Gipszusammensetzung gegeben werden muss. Spezielle Polymere sind vergleichsweise aufwändig herzustellen und somit teuer.

Der Erfindung liegt das Problem zugrunde, ein einfaches und effizientes Verfahren zur Verflüssigung von tonhaltigen Gipszusammensetzungen zur Verfügung zu stellen. Die dafür verwendeten Additive und Zusammensetzungen sollen einfach und kostengünstig verfügbar sein und zu einer effizienten Verflüssigung führen. Insbesondere sollen Additive bereitgestellt werden, die es ermöglichen, Kammpolymere nur noch in geringen Dosierungen einzusetzen, um eine Verflüssigungswirkung zu erzielen. Zudem soll vermieden werden, dass die Gipszusammensetzung einen hohen Anteil an organischen Polymeren aufweist, da dies zu Veränderungen der Struktur und somit der Eigenschaften des Produktes führen kann.

### Ausführung der Erfindung

Gegenstand der Erfindung ist die Verwendung eines Additivs, das ausgewählt ist aus primären, sekundären, tertiären Alkylaminen und quartären Alkylammoniumverbindungen, die gegebenenfalls jeweils mindestens eine Hydroxygruppe und/oder Ethergruppe aufweisen, zur Verbesserung der Verarbeitbarkeit von tonhaltigen Gipszusammensetzungen, die mindestens ein Kammpolymer enthalten, das über Ester-, Amid- und/oder Ethergruppen an eine Hauptkette angebundene Seitenketten aufweist.

Bei den erfindungsgemäß einsetzbaren Additiven handelt es sich vorzugsweise um Alkylamine, insbesondere Monoamine, Diamine oder Triamine.

Die Additive weisen in besonderen Ausführungsformen mindestens eine Hydroxygruppe und/oder mindestens eine Ethergruppe auf. Beispielsweise können die Verbindungen jeweils eine oder mehrere Hydroxygruppen und/oder eine oder mehrere Ethergruppen aufweisen. In einer bevorzugten Ausführungsform weisen die Verbindungen mehrere Ethergruppen auf.

Überraschenderweise kann durch den erfindungsgemäßen Zusatz der Additive zu tonhaltigen Gipszusammensetzungen erreicht werden, dass darin enthaltene Kammpolymere eine gute Verflüssigungswirkung erzielen. Es ist auch nicht erforderlich, zusätzlich ein basisches wasserlösliches Polymer einzusetzen, wie in WO 2009/068899 offenbart. In einer bevorzugten Ausführungsform wird kein weiteres basisches wasserlösliches Polymer gemäß WO 2009/068899 eingesetzt, insbesondere kein Polyvinylpyrrolidon, Polyvinylalkoholderivat oder Stärkeadditiv. Der Einsatz solcher Polymere ist jedoch grundsätzlich möglich.

In einer bevorzugten Ausführungsform der Erfindung sind die Alkylamine Monoamine, Diamine oder Triamine. Vorzugsweise sind die Monoamine solche, bei denen die Aminogruppe endständig an ein Kohlenstoffatom der Alkylkette substituiert ist (α-Amin). Bevorzugt sind die Diamine solche, bei denen die beiden Aminogruppen an beide endständigen C-Atome einer linearen Alkylkette substituiert sind (α-, Ω-Diamin).

In einer bevorzugten Ausführungsform wird ein primäres Amin eingesetzt, das zugleich ein primärer Alkohol ist. Dabei können die beiden Substituenten in α-, Ω-Positionen stehen. In einer bevorzugten Ausführungsform ist bei den erfindungsgemäßen primären, sekundären und tertiären Alkylaminen und quartären Alkylammoniumverbindungen die Alkylgruppe eine lineare, nicht verzweigte Alkylgruppe.

Die Alkylamine können erfindungsgemäß in jeder bekannten Form eingesetzt werden. Dem Fachmann ist bekannt, dass bei basischen Aminen ein Gleichgewicht zwischen der protonierten und deprotonierten Form vorliegt. Sofern die Amine in einer sauren Lösung vorliegen, weisen sie daher einen dem pH-Wert entsprechenden Anteil an der Ammoniumverbindung auf. Die Amine können auch als Bestandteile von Metallkomplexen eingesetzt werden. Es ist bekannt, dass Amine mit mehreren Aminogruppen Komplexe mit Metallen ausbilden. Erfindungsgemäß können beispielsweise Kupferaminkomplexe eingesetzt werden, wie Kupfer (II) Ethylendiaminhydroxid.

In einer bevorzugten Ausführungsform der Erfindung sind die Alkylamine ausgewählt aus

R1-NH₂, R2-NH-R2' und NH₂-R3-NH₂,

wobei R1, R2 und R2' unabhängig voneinander Alkylreste mit 1 bis 200 C-Atomen sind, und
R3 ein Alkylrest mit 1 bis 150 C-Atomen ist.

In einer bevorzugten Ausführungsform der Erfindung sind
R1, R2 und R2' unabhängig voneinander Alkylreste mit 30 bis 150 C-Atomen, und
R3 ist ein Alkylrest mit 20 bis 120 C-Atomen.

In einer bevorzugten Ausführungsform der Erfindung handelt es sich bei den Alkylaminen um Polyetheramine, insbesondere Polyethermonoamine oder Polyetherdiamine.

Bevorzugte Polyetheramine sind Ethergruppen-haltige aliphatische Monoamine, insbesondere Polyoxyalkylen-Monoamine. Solche sind beispielsweise erhältlich unter dem Namen Jeffamine^{®} (von Huntsman). Insbesondere geeignete Polyoxyalkylen-Monoamine sind Jeffamine^{®} M-600, Jeffamine^{®} M-1 000, Jeffamine^{®} M-2005 und Jeffamine^{®} M-2070.

Weitere bevorzugte Polyetheramine sind Ethergruppen-haltige aliphatische Diamine, beispielsweise Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin und höhere Oligomere dieser Diamine, Bis-(3-aminopropyl)polytetrahydrofurane und andere Polytetrahydrofuran-diamine mit Molekulargewichten im Bereich von beispielsweise 350 bis 5200, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} D-4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000;

In einer weiteren bevorzugten Ausführungsform der Erfindung handelt es sich bei den Alkylaminen um Alkylamine, welche Imingruppen aufweisen und beispielsweise erhältlich sind unter dem Namen Lupasol® (von BASF). Insbesondere geeignete Alkylamine, welche Imingruppen aufweisen, sind Lupasol® FC, Lupasol® G 10, Lupasol® G 20, Lupasol® G 35, Lupasol® G 100 und Lupasol® G 500.

Es ist insbesondere bevorzugt, wenn das Additiv ein Molekulargewicht von 200 - 4000, vorzugsweise von 300 -2500, aufweist. Dadurch ist das Additiv typischerweise weniger oder nicht flüchtig und führt auch weniger zu Geruchsbelästigungen.

Erfindungsgemäß enthält die Gipszusammensetzung mindestens ein Kammpolymer, das über Ester-, Amid- und/oder Ethergruppen an eine Hauptkette angebundene Seitenketten aufweist. Dabei bedeutet "aufweist", dass neben mindestens einer Ester-, Amid- oder Ethergruppe weitere davon unterschiedliche Seitenketten enthalten sein können. Kammpolymere weisen häufig eine Kombination verschiedener Seitenketten auf, die sich beispielsweise hinsichtlich funktioneller Gruppen, Länge oder Anteil an den gesamten Seitenketten unterscheiden. Solche Kammpolymere sind im Stand der Technik bekannt.

Geeignete Kammpolymere sind einerseits solche, die über Ethergruppen an das lineare Polymergerüst gebundene Seitenketten aufweisen. Über Ethergruppen an das lineare Polymergerüst gebundene Seitenketten können durch Polymerisation von Vinylethern oder Allylethern erhalten werden. Derartige Kammpolymere sind beispielsweise in WO 2006/133933 A2 beschrieben, deren Inhalt hiermit durch Bezugnahme eingeschlossen wird.

Die Vinylether oder Allylether weisen insbesondere die Formel (II) auf:

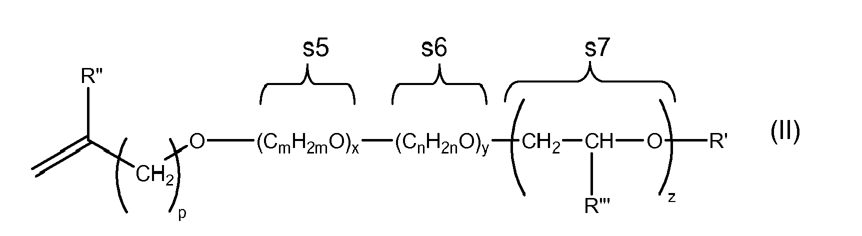

Hierbei steht R' für H oder für einen aliphatischen Kohlenwasserstoffrest mit 1 bis 20 C-Atomen oder einen cycloaliphatischen Kohlenwasserstoffrest mit 5 bis 8 C-Atomen oder für einen gegebenenfalls substituierten Arylrest mit 6 bis 14 C-Atomen. R" steht für H oder für eine Methylgruppe und R'" steht für einen unsubstituierten oder substituierten Arylrest, insbesondere für einen Phenylrest. Weiterhin stehen p für 0 oder 1; m und n unabhängig voneinander je für 2, 3 oder 4; und x und y und z unabhängig voneinander je für Werte aus dem Bereich von 0 bis 350. Die Abfolge der in Formel (II) als s5, s6 und s7 bezeichneten Teilstrukturelemente kann hierbei alternierend, blockartig oder zufällig angeordnet sein.

In der Formel (II) ist als Endgruppe an einer Seite des Polymers eine Vinylgruppe dargestellt. In einer Ausführungsform ist jedoch die Vinylgruppe nicht enthalten, da sie bei der Polymerisationsreaktion in einer Kettenabbruchsreaktion zu einer gesättigten Gruppe reagiert hat. Alternativ kann die endständige Vinylgruppe in einer der Polymerisation nachfolgenden Reaktion entfernt oder modifiziert worden sein.

In bevorzugten Ausführungsformen ist das Kammpolymer ein Copolymer von Vinylether oder Allylether mit mindestens einem Comonomer, welches ausgewählt ist aus der Gruppe bestehend aus Maleinsäureanhydrid, Maleinsäure, Methacrylsäure, Acrylsäure, Methacrylamid und Acrylamid.

Es hat sich gezeigt, dass eine überraschend gute Verflüssigungswirkung in tonhaltigen Gipszusammensetzungen erzielt wird, wenn das Kammpolymer ein Copolymer von Vinylether mit einem Comonomer, welches ausgewählt ist aus der Gruppe bestehend aus Maleinsäureanhydrid, Maleinsäure, Acrylsäure und Acrylamid, ist.

Weiter hat sich gezeigt, dass eine überraschend gute Verflüssigungswirkung in tonhaltigen Gipszusammensetzungen erzielt wird, wenn die Vinylether oder Allylether, insbesondere Vinylether, ein Molekulargewicht von 500 - 10'000 g/mol, insbesondere 1'000 - 5'000 g/mol, aufweisen.

Weiter ist es vorteilhaft für die Verflüssigungswirkung in tonhaltigen Gipszusammensetzungen, wenn das Kammpolymer ein Copolymer von Vinylether mit mindestens einem Comonomer ist und das Molverhältnis von Vinylether zu Comonomer ein Verhältnis von 1 - 10 zu 1, vorzugsweise 3 - 8 zu 1, aufweist.

Als Kammpolymer geeignet, und den vorgehend beschriebenen Kammpolymeren bevorzugt, sind andererseits Kammpolymere mit über Ester-oder Amidgruppen an das lineare Polymergerüst gebundenen Seitenketten. In einer bevorzugten Ausführungsform der Erfindung ist das Kammpolymer ein Copolymer der Formel (I)

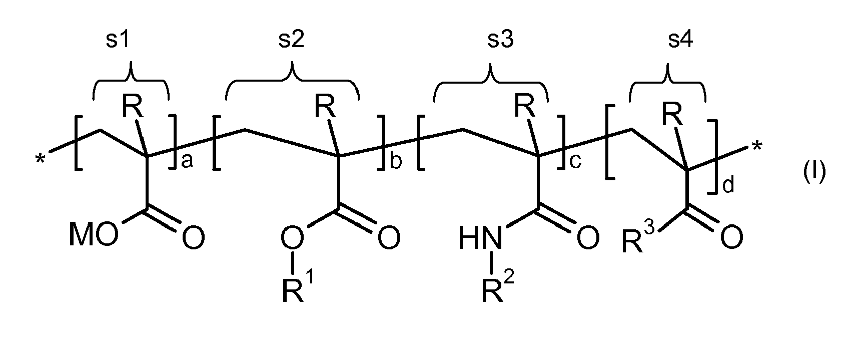

Hierbei stehen M unabhängig voneinander für H, Alkalimetallion, Erdalkalimetallion, zwei- oder dreiwertiges Metallion, Ammoniumion, oder organische Ammoniumgruppe. Der Term "unabhängig voneinander" bedeutet im vorliegenden Dokument jeweils, dass ein Substituent unterschiedliche zur Verfügung stehenden Bedeutungen in demselben Molekül aufweisen kann. So kann beispielsweise das Copolymer der Formel (I) gleichzeitig Carbonsäuregruppen und Natriumcarboxylatgruppen aufweisen, das heisst, dass für M in diesem Falle H⁺ und Na⁺ unabhängig voneinander bedeuten.

Dem Fachmann ist klar, dass es sich einerseits um ein Carboxylat handelt, an welches das Ion M gebunden ist, und dass andererseits bei mehrwertigen Ionen M die Ladung durch Gegenionen ausgeglichen sein muss.

Weiterhin stehen die Substituenten R unabhängig voneinander für Wasserstoff oder für eine Methylgruppe.

Des Weiteren stehen die Substituenten R¹ unabhängig voneinander für -[AO]q-R⁴. Die Substituenten R² stehen unabhängig voneinander für eine Alkylgruppe, Cycloalkylgruppe oder Alkylarylgruppe mit 1-20 C-Atomen oder für -[AO]q-R⁴. Der Substituent A steht in beiden Fälle unabhängig voneinander für eine C₂- bis C₄-Alkylengruppe und R⁴ für eine C₁- bis C₂₀-Alkylgruppe, - Cyclohexylgruppe oder -Alkylarylgruppe, während q einen Wert von 2 bis 250, insbesondere von 8 bis 200, besonders bevorzugt von 11 bis 150, darstellt.

Des Weiteren stehen die Substituenten R³ unabhängig voneinander für -NH₂, -NR⁵R⁶, -OR⁷NR⁸R⁹. Hierbei stehen R⁵ und R⁶ unabhängig voneinander für eine C₁- bis C₂₀-Alkylgruppe, -Cycloalkylgruppe oder -Alkylarylgruppe oder -Arylgruppe oder für eine Hydroxyalkylgruppe oder für eine Acetoxyethyl-(CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-), oder R⁵ und R⁶ bilden zusammen einen Ring, von dem der Stickstoff ein Teil ist, um einen Morpholin- oder Imidazolinring aufzubauen.

Weiterhin stehen die Substituenten R⁸ und R⁹ je unabhängig voneinander für eine C₁- bis C₂₀-Alkylgruppe, -Cycloalkylgruppe, -Alkylarygruppe, - Arylgruppe oder für eine Hydroxyalkylgruppe.

Die Abfolge der in Formel (I) als s1, s2, s3 und s4 bezeichneten Teilstrukturelemente kann hierbei alternierend, blockartig oder zufällig angeordnet sein.

Schliesslich stellen die Indizes a, b, c und d Molverhältnisse der Struktureinheiten s1, s2, s3 und s4 dar. Diese Strukturelemente stehen in einem Verhältnis von
a/b/c/d = (0.1 - 0.9) / (0.1 - 0.9) / (0 - 0.8) / (0 - 0.3),
insbesondere a/b/c/d = (0.1 - 0.9) / (0.1 - 0.9) / (0 - 0.5) / (0 - 0.1),
bevorzugt a/b/c/d = (0.1 - 0.9) / (0.1 - 0.9) / (0 - 0.3) / (0 - 0.06),
zueinander, mit der Massgabe, dass a + b + c + d = 1 ist. Die Summe c + d ist bevorzugt grösser als 0.

Es hat sich gezeigt, dass eine überraschend gute Verflüssigungswirkung in tonhaltigen Gipszusammensetzungen erzielt wird, wenn R in Formel (I) für Wasserstoff steht. Ferner positiv wirkt sich ein Molekulargewicht der Struktureinheiten s2, s3 und s4 von 500 - 10'000 g/mol, insbesondere 1'000 - 5'000 g/mol, auf die Verflüssigungswirkung in tonhaltigen Gipszusammensetzungen aus.

Es wurde weiter überraschend gefunden, dass sich das Verhältnis von a/(b+c+d) = 1 - 10, insbesondere 3 - 8, vorteilhaft auf die Verflüssigungswirkung in tonhaltigen Gipszusammensetzungen auswirkt.

In bevorzugten Ausführungsformen der Erfindung weisen die kammförmigen Polymere Molekulargewichte zwischen 5.000 und 500.000, insbesondere zwischen 10.000 und 200.000 oder zwischen 20.000 und 150.000 auf.

In der Formel (I) sind die beiden Enden des Polymers mit einem Stern versehen. Die Kammpolymere können an den Enden der Hauptkette mit verschiedenen Gruppen modifiziert sein, je nachdem, wie die Kettenabbruchsreaktion erfolgt, welche Ausgangsstoffe eingesetzt werden, und ob das Polymer einer nachfolgenden Reaktion ausgesetzt wird, bei der eine verbleibende endständige Vinylgruppe reagiert. In besonderen Ausführungsformen sind die endständigen Gruppen unabhängig voneinander ausgewählt sein aus H, Methyl oder Vinyl.

Verfahren zur Herstellung der Kammpolymere der Formel (I) sind bekannt. Die Synthese kann einerseits durch radikalische Polymerisation der entsprechenden Monomere oder andererseits durch eine sogenannte polymeranaloge Umsetzung einer Polycarbonsäure erfolgen. In der polymeranalogen Umsetzung wird die Polycarbonsäure der Formel (IV) mit den korrespondierenden Alkoholen, Aminen verestert oder amidiert und dann allenfalls neutralisiert oder teilneutralisiert (je nach Art des Rest M z.B. mit Metallhydroxiden oder Ammoniak). Die polymeranaloge Umsetzung wird beispielsweise in EP 1 138 697 B1 auf Seite 7 Zeile 20 bis Seite 8 Zeile 50, sowie in den Beispielen oder in EP 1 061 089 B1 auf Seite 4, Zeile 54 bis Seite 5 Zeile 38 sowie in den Beispielen beschrieben.

Geeignete Kammpolymere sind beispielsweise solche, die von der Firma Sika unter der Markenbezeichnung "Viscocrete" vertrieben werden.

Gegenstand der Erfindung ist auch eine tonhaltige Gipszusammensetzung, enthaltend
(a) mindestens ein Kammpolymer wie vorhergehend ausgeführt,
(b) mindestens ein Additiv wie vorhergehend ausgeführt, und
(c) tonhaltigen Gips.

Die erfindungsgemäße Gipszusammensetzung enthält bevorzugt
(a) 0,1 bis 5 Gew.%, insbesondere 0,5 bis 3 Gew.%, Kammpolymer,
(b) 0,01 bis 2 Gew.%, insbesondere 0,05 bis 0,5 Gew.% Additiv,
(c) 15 bis 99,5 Gew.%, insbesondere 50 bis 99 Gew.% tonhaltigen Gips.

Erfindungsgemäß wird mit dem Begriff "Gipszusammensetzung" ein Gemisch bezeichnet, das zur weiteren Verarbeitung zu einem Formkörper geeignet ist. Dabei kann die Gipszusammensetzung noch weitgehend trocken sein oder bereits mit Wasser versetzt sein. Die Gipszusammensetzung kann ganz oder teilweise abgebunden sein. Der Gips liegt in dem Gemisch in Form von Partikeln oder in fein verteilter Form vor.

Erfindungsgemäß kann der "Gips" in jeder bekannten Modifikation von Gips oder Gemischen davon vorliegen. Der Gips ist insbesondere ausgewählt aus Calciumsulfat-Dihydrat, Calciumsulfat-α-Halbhydrat, Calciumsulfat-β-Halbhydrat oder Calciumsulfat-Anhydrid und Mischungen davon.

In einer bevorzugten Ausführungsform ist Gips Calciumsulfat-β-Halbhydrat. Gipszusammensetzungen auf Basis von Calciumsulfat-β-Halbhydrat werden zur bevorzugt Herstellung von Gipsplatten verwendet. Vorzugsweise umfasst die Gipszusammensetzung mindestens 70 Gew.-% Calciumsulfat-β-Halbhydrat, noch mehr bevorzugt mindestens 90 Gew.-% Calciumsulfat-β-Halbhydrat, bezogen auf das Gesamtgewicht des Bindemittels.

Die erfindungsgemäße Gipszusammensetzung ist tonhaltig. Im Allgemeinen wird Gips industriell auf zwei verschiedene Arten gewonnen. Zum einen kann Gips als mehr oder weniger reines Calciumsulfat als Nebenprodukt bei chemischen Prozessen anfallen, beispielsweise bei der Rauchgasentschwefelung. Zum anderen wird Gips aus natürlichen Vorkommen gewonnen. Naturgips besteht jedoch nicht aus reinem Calciumsulfat, sondern enthält Beimengungen von weiteren Mineralien, wobei die Zusammensetzung je nach Fundort variiert. Naturgips enthält häufig einen mehr oder weniger hohen Anteil an Ton. Dieser enthält Tonmineralien, die im Allgemeinen Schichtsilikate sind und weitere organische oder anorganische Materialien beinhalten können. In einer Ausführungsform der Erfindung wird tonhaltiger Gips eingesetzt, der mindestens 0,2 Gew.-%, mindestens 0,5 Gew.-% oder mindestens 1 Gew-% Ton enthält. Beispielsweise können 0,1-20 oder 0,5-10 Gew.-% Ton enthalten sein.

Die erfindungsgemäße Gipszusammensetzung enthält mindestens 15 Gew.-%, bevorzugt mindestens 50 Gew.-%, noch mehr bevorzugt mindestens 70 Gew.-% oder mindestens 95 Gew.-% tonhaltigen Gips, bezogen auf das Gesamtgewicht. Die erfindungsgemäße tonhaltige Gipszusammensetzung kann wasserfrei sein oder weniger als 0,5, 1 oder 5 Gew.-% Wasser enthalten. Sie kann jedoch auch bis zu 10, 20, 50 oder 80 Gew.-% Wasser enthalten. Der Anteil des Additivs (b) an einer erfindungsgemäßen tonhaltigen Gipszusammensetzung liegt in einer bevorzugten Ausführungsform zwischen 0,02 und 2 Gew.-%. insbesondere zwischen 0,01 und 1 Gew.-%. In weiteren bevorzugten Ausführungsformen ist der Gehalt des Additivs zwischen 0,05 und 0,5 Gew.-% oder zwischen 0,1 und 0,4 Gew.-%. Bei einer bevorzugten Anwendung ist die Gipszusammensetzung zementfrei. Als Gipszusammensetzungen werden insbesondere Zusammensetzungen verstanden, welche als Bindemittel ausschließlich oder überwiegend Calciumsulfat, insbesondere mehr als 80 Gew.-% oder mehr als 95 Gew.-% Calciumsulfat enthalten.

In einer bevorzugten Ausführungsform liegt das Verhältnis Kammpolymer/Additiv zwischen 5:1 und 1:5, insbesondere zwischen 2:1 und 1:2.

Erfindungsgemäß ist es bevorzugt, durch Einsatz der Kammpolymere in Verbindung mit den Additiven einen möglichst geringen Wasseranteil zu erreichen, wobei die Verarbeitbarkeit gewährleistet sein muss.

Die Gipszusammensetzung kann neben dem tonhaltigen Gips ein weiteres Bindemittel enthalten. Unter den Begriff "Bindemittel" fallen neben Gips weitere hydraulisch abbindende Substanzen, wie beispielsweise Zement, insbesondere Portlandzemente oder Tonerdeschmelzzemente und respektive deren Mischungen mit Flugaschen, Silica fume, Schlacke, Hüttensande und Kalk, insbesondere Kalksteinfüllmittel und gebrannter Kalk.

Die Gipszusammensetzung kann weitere Zusätze, beispielsweise Fasern, weitere Verflüssiger, beispielsweise Lignosulfonate, sulfonierte Naphthalin-Formaldehyd Kondensate, sulfonierte Melamin-FormaldehydKondensate oder Polycarboxylatether (PCE), Beschleuniger, Verzögerer, Stärke, Zucker, Silikone, Schwindreduzierer, Entschäumer, Schaumbildner, Farbstoffe, Mittel zur pH-Einstellung, Füllstoffe, Flammschutzmittel oder sonstige übliche Zusätze enthalten.

Die Gipszusammensetzung kann auch weitere Polymere enthalten. Beispielsweise können Homo- oder Copolymere enthalten sein, die aufgebaut sind aus Monomeren, ausgewählt sind aus der Gruppe bestehend aus Ethylen, Propylen, Butylen, Isopren, Butadien, Styrol, Acrylonitril, Acrylsäure, Methacrylsäure, Acrylsäurealkylester, Methacrylsäurealkylester, Vinylester und Vinylchlorid.

Besonders bevorzugt ist ein Bindemittel enthaltendes Gemisch umfassend das Kammpolymer, Calciumsulfat-β-Halbhydrat und mindestens einen Beschleuniger, sowie weitere Zusätze, wie sie für die Herstellung einer Gipsplatte üblich sind.

Gegenstand der Erfindung ist auch ein Dispergiermittel für eine tonhaltige Gipszusammensetzung, enthaltend
(a) mindestens ein Kammpolymer wie vorhergehend ausgeführt und
(b) mindestens ein Additiv, das ausgewählt ist wie oben ausgeführt.

In einer bevorzugten Ausführungsform der Erfindung enthält das Dispergiermittel
(a) 1 bis 95 Gew.%, insbesondere 5 bis 50 Gew.% Kammpolymer,
(b) 0,5 bis 60 Gew.%, insbesondere 5 bis 40 Gew.% Additiv und
(d) 0 bis 98,5 Gew.%, insbesondere 10 bis 90 Gew.% Wasser.

Erfindungsgemäß wird mit "Dispergiermittel" allgemein eine Zusammensetzung bezeichnet, die dazu dient, die Verarbeitbarkeit einer Gipszusammensetzung zu verbessern. Das Dispergiermittel kann beispielsweise ein fester oder flüssiger Zusatz, insbesondere eine wässrige Lösung oder eine Dispersion sein.

Das Dispergiermittel kann weitere Bestandteile enthalten. Beispiele sind Lösungsmittel oder Additive, wie sie in der Bauchemie geläufig sind, insbesondere oberflächenaktive Stoffe, Stabilisatoren gegen Hitze und Licht, Farbstoffe, Entschäumer, Beschleuniger, Verzögerer und Schaumbildner. Sofern das Dispergiermittel ein flüssiger Zusatz ist, sind beispielsweise 20 bis 98 Gew.-% oder 50 bis 95 Gew.-% Wasser enthalten.

In einer bevorzugten Ausführungsform ist das Dispergiermittel eine Polymerdispersion. Eine solche Polymerdispersion kann neben dem Kammpolymer und Wasser weitere Zusätze enthalten, beispielsweise Viskositätsregler, Dispergierhilfsmittel, pyrogenes oder kolloidales Siliciumdioxid, Phosporsäuren, Biozide, Fungizide, Calciumsulfat oder amorphes Aluminiumoxid.

Gegenstand der Erfindung ist auch die Verwendung eines erfindungsgemäßen Dispergiermittels zur Verbesserung der Verarbeitbarkeit von tonhaltigen Gipszusammensetzungen.

Gegenstand der Erfindung ist auch ein Verfahren zur Herstellung einer erfindungsgemäßen tonhaltigen Gipszusammensetzung, umfassend die Schritte
(i) Bereitstellen der Komponenten (a), (b) und (c) wie oben ausgeführt und
(ii) Vermischen der Komponenten, gegebenenfalls mit weiteren Zusätzen, zu der tonhaltigen Gipszusammensetzung.

Erfindungsgemäß können das Kammpolymer (a) und/oder das Additiv (b) getrennt oder vorgemischt in fester oder flüssiger Form zugegeben werden.

Das Kammpolymer und/oder das Additiv können im festen Aggregatszustand ein Bestandteil der Gipszusammensetzung, einer sogenannten Trockenmischung, sein. Eine solche Zusammensetzung ist über längere Zeit lagerfähig und wird typischerweise in Säcken abgepackt oder in Silos gelagert. Eine solche Trockenmischung ist auch nach längerer Lagerungszeit einsetzbar und weist eine gute Rieselfähigkeit auf. Das erfindungsgemäße Additiv kann ebenfalls Bestandteil einer solchen Trockenmischung sein.

Das Additiv und/oder Kammpolymer können auch einer Gipszusammensetzung mit oder kurz vor oder kurz nach der Zugabe des Wassers beigegeben werden. Als besonders geeignet hat sich hierbei die Zugabe des Additivs und/oder des Kammpolymers in Form einer wässrigen Lösung oder Dispersion gezeigt, insbesondere als Anmachwasser oder als Teil des Anmachwassers. Die Herstellung der wässrigen Lösung oder Dispersion eines Kammpolymers erfolgt beispielsweise durch Zusetzen von Wasser bei der Herstellung des Kammpolymers oder durch nachträgliches Vermengen von Kammpolymer mit Wasser. Typischerweise beträgt dabei der Anteil des Kammpolymers 10 bis 90 Gewichts-%, insbesondere 20 bis 50 Gew.-%, bezogen auf das Gewicht der wässrigen Lösung oder Dispersion.

In einer bevorzugten Ausführungsform der Erfindung wird zunächst eine Trockenmischung der Gipszusammensetzung hergestellt, die den tonhaltigen Gips (c) und das kammförmige Polymer (a) enthält. Das Additiv (b) wird erst zu einem späten Zeitpunkt hinzugefügt, beispielsweise mit dem Wasser vermischt. Erfindungsgemäß kann es von Vorteil sein, das Additiv erst kurz vor der Verarbeitung hinzuzufügen. Auf diese Weise wird vermieden, dass die Amine bei langer Lagerung unerwünschte Nebenreaktionen eingehen, oder dass wegen der Amine für längere Zeit eine unerwünschte Geruchsbeeinträchtigung auftritt.

In einer bevorzugten Ausführungsform der Erfindung wird vor der Herstellung der erfindungsgemäßen Gipszusammensetzung zunächst der Tongehalt des Gipses bestimmt. Die Quantifizierung kann beispielsweise mittels Röntgenbeugung (XRD) erfolgen, wobei die Rietveld-Methode eingesetzt werden kann. Es kann dann, beispielsweise durch Vergleich mit einem Standard ermittelt werden, wie viel Additiv hinzugefügt werden muss.

Gegenstand der Erfindung ist auch ein Verfahren zur Herstellung eines Gipsformkörpers, umfassend die Schritte:
(iii) Bereitstellen einer erfindungsgemäßen tonhaltigen Gipszusammensetzung, die zusätzlich Wasser aufweist,
(iv) Formen zu einem Formkörper und
(v) Aushärten des Formkörpers.

Erfindungsgemäß wird mit "Formkörper" jeder ausgehärtete Gegenstand bezeichnet, der eine dreidimensionale Ausdehnung aufweist. Das Aushärten des Formkörpers erfolgt durch Trocknen im Ofen oder an der Luft.

Der erfindungsgemäße Formkörper kann ein beweglicher Gegenstand sein, beispielsweise eine Gipsplatte oder eine Skulptur. Der erfindungsgemäße Formkörper kann jedoch auch eine Füllung oder Beschichtung sein, beispielsweise ein Gipsputz, ein Bodenbelag oder Estrich, oder ein beliebiges Produkt, das bei der Verteilung und Aushärtung von Spachtelmasse entsteht, beispielsweise die Füllung eines Hohlraums oder einer Fuge.

Gegenstand der Erfindung ist auch ein Gipsformkörper, erhältlich nach einem erfindungsgemäßen Verfahren, insbesondere in Form einer Gipsplatte, eines Estrichs, eines Wandputzes, einer Skulptur oder einer Füllung eines Hohlraums.

Überraschenderweise löst der Zusatz der erfindungsgemäßen Additive zu tonhaltigen Gipszusammensetzungen in Verbindung mit Kammpolymeren die erfindungsgemäße Aufgabe. Bereits bei Zusatz des Additivs in sehr geringen Mengen, beispielsweise 0,01 bis 0,2 Gew.-%, kann erreicht werden, dass das Kammpolymer eine Verflüssigungswirkung entfaltet, die mit der bei reinem Gips vergleichbar ist. Durch die erfindungsgemäßen Additive kann daher verhindert werden, dass bei tonhaltigen Gipszusammensetzungen der Anteil der Kammpolymere als Verflüssiger gegenüber nicht tonhaltigen Gipszusammensetzungen erhöht werden muss. Dies wird beispielsweise mit einer Menge des Additivs erreicht, die zwischen 10 und 150% (Gewicht/Gewicht) der Menge des eingesetzten Kammpolymers entspricht. Da niedermolekulare Amine und Ammoniumverbindungen einfach verfügbar und kostengünstig sind, wird daher eine einfache und kostengünstige Methode zur Verflüssigung von tonhaltigen Gipszusammensetzungen bereitgestellt.

### Beispiele

Die Erfindung wird nun anhand von Beispielen näher erläutert.

### Verwendete Kammpolymere KP und Additive

**Tabelle 1:**

| | |
|---|---|
| **KP-1,** Kammpolymer der Formel (I), dessen R für Wasserstoff steht | |
| **KP-2,** Kammpolymer der Formel (I), dessen R für Methyl steht | |
| Dipropylamin | Sigma-Aldrich Chemie GmbH, Schweiz |
| Lupasol^{®} G10 | BASF, Deutschland |
| Diaminobutan | Sigma-Aldrich Chemie GmbH, Schweiz |
| Tetrabutyl-ammoniumbromid | Sigma-Aldrich Chemie GmbH, Schweiz |
| Jeffamine^{®} M-600 | Huntsman, USA |
| Jeffamine^{®} M-2005 | Huntsman, USA |
| Jeffamine^{®} M-2070 | Huntsman, USA |
| Jeffamine^{®} ED-2003 | Huntsman, USA |
| Jeffamine^{®} D-230 | Huntsman, USA |
| Jeffamine^{®} M-2070 | Huntsman, USA |

Die in Tabelle 1 angegebenen Polymere KP-1 und KP-2 wurden mittels polymeranaloger Umsetzung aus Polyacrylsäure im Fall von KP-1, respektive aus Polymethacrylsäure im Fall von KP-2, mit den korrespondierenden Alkoholen und Aminen nach bekannter Art und Weise hergestellt. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen.

### Herstellung von Gipsslurrys und Charakterisierung des Fliessverhaltens

Die Ausbreitmasse (ABM), der Versteifungsbeginn (VB) und das Versteifungsende (VE) von Gipsslurrys wurden wie folgt bestimmt. Zunächst wurden 140 g Wasser mit dem Kammpolymer (Verflüssiger) und dem Additiv versetzt. Dabei wurde die Menge an Kammpolymer oder Verflüssiger vorher im Hinblick auf die Menge Calciumsulfat eingestellt. Bei den Vergleichsversuchen wurden entsprechend Zusätze und/oder Kammpolymer weggelassen. Dann wurden 200 g Calciumsulfat-β-Halbhydrat und 0.2 g Calciumsulfat-Dihydrat innerhalb von 15 Sekunden in das Wasser eingestreut und der Gipsslurry 15 Sekunden sumpfen gelassen. Anschliessend wurde 30 Sekunden von Hand intensiv gerührt. Der Minikonus mit einem Durchmesser von 50 mm und einer Höhe von 51 mm wurde gefüllt und nach 75 Sekunden das Ausbreitmass (ABM) in Millimeter bestimmt.

Der Durchmesser des sich bildenden Gipskuchens wurde gemessen, sobald kein Fliessen mehr beobachtet wurde. Der Durchmesser in mm wurde als Ausbreitmasse bezeichnet. Der Versteifungsbeginn und das Versteifungsende wurden mit der Messerschnittmethode nach DIN EN 13279-2 und der Daumendruckmethode bestimmt. Der Versteifungsbeginn (VB) ist erreicht, wenn nach einem Messerschnitt durch den Gips-Kuchen die Schnittränder nicht mehr zusammenlaufen. Das Versteifungsende ist eingetreten (VE), wenn bei einem Fingerdruck mit einem Druckaufwand von ca. 5 kg kein Wasser mehr aus dem Gips-Kuchen austritt.

Um den Tongehalt genau und reproduzierbar einzustellen, wurde reines Calciumsulfat mit einer eingestellten Menge Ton versetzt. Es wurde ein Calciumsulfat-β-Halbhydrat zusammen mit Calciumsulfat-Dihydrat als Gips eingesetzt und Bentonit (Sigma-Aldrich Chemie GmbH, Schweiz) hinzugefügt.

### Vergleichsbeispiele

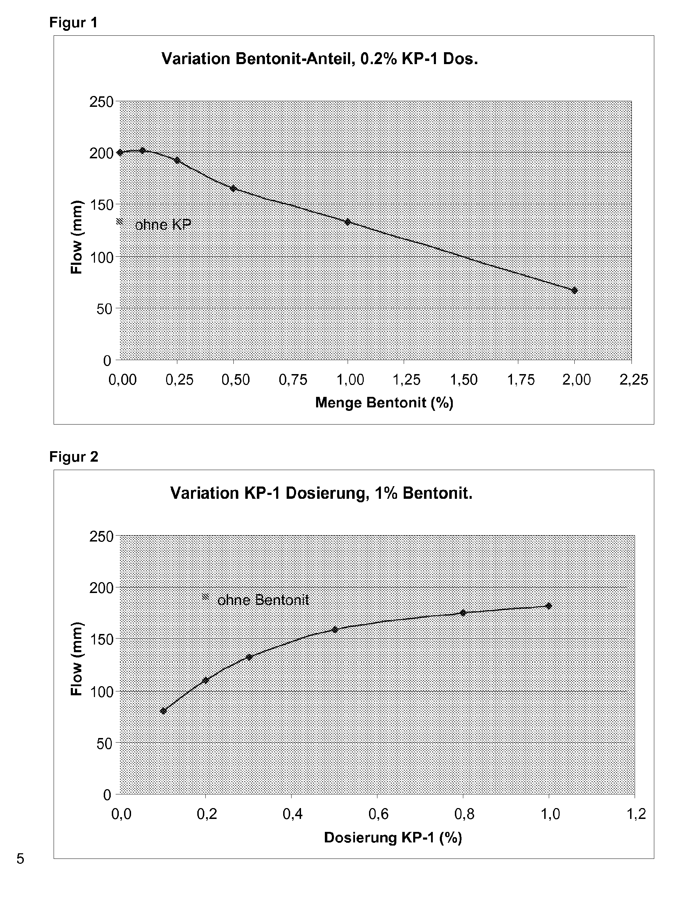

Um den Einfluß des Tongehalts auf die Wirkung eines Verflüssigers zu ermitteln, wurde eine Versuchsreihe durchgeführt. Bei diesem Versuch ist kein erfindungsgemäßes Additiv enthalten. Es wurden Gipsslurrys mit steigendem Anteil an Ton (Bentonit, 0 bis 2 Gew.%, bezogen auf die Gesamtmenge Calciumsulfat) und konstantem Gehalt an Kammpolymer **KP-1** (0,2 Gew.%, bezogen auf die Gesamtmenge Calciumsulfat) hergestellt und der Flow gemessen. Die Ergebnisse sind in Figur 1 dargestellt. Die Wirkung des Verflüssigers nimmt mit steigendem Tongehalt deutlich ab.

Es wurde in einer Messreihe bei gleichbleibendem Tongehalt (Bentonit, 1 Gew.%) der Anteil des Kammpolymers **KP-1** erhöht. Bei diesem Versuch ist kein erfindungsgemäßes Additiv enthalten. Die Ergebnisse sind in der Figur 2 gezeigt. Um eine Verflüssigungswirkung in dem Ausmass zu erhalten, die der bei nicht tonhaltigem Gips vergleichbar ist, muss eine deutlich erhöhte Menge von Kammpolymer zugesetzt werden (ca. 5-fache Menge).

### Beispiele 1 - 5

Es wurden erfindungsgemäße Gipsslurrys mit steigendem Anteil an Dipropylamin als Additiv hergestellt und die Eigenschaften gemessen. Die Ergebnisse sind in der Tabelle 2 zusammengefasst. Bei den Beispielen 1 und 2 handelt es sich um Vergleichsbeispiele.

**Tabelle 2:**

| **Bsp.** | **A Gips %** | **B Ton %** | **C KP-1%** | **D Additiv** | **E %** | **Flow [mm]** | **VB [min]** | **VE [min]** |
|---|---|---|---|---|---|---|---|---|
| 1 | 100 | 0 | 0,2 | - | - | 209 | 5:00 | 12:30 |
| 2 | 99 | 1 | 0,2 | - | - | 103 | 2:00 | 7:00 |
| 3 | 99 | 1 | 0,2 | Dipropylamin | 0,05 | 178 | 3:30 | 8:57 |
| 4 | 99 | 1 | 0,2 | Dipropylamin | 0,10 | 212 | 4:00 | 10:25 |
| 5 | 99 | 1 | 0,2 | Dipropylamin | 0,20 | 225 | 6:40 | 13:00 |

| | | | | | | | | |
|---|---|---|---|---|---|---|---|---|
| A: Anteil Gips, Calciumsulfat (Gew.%) B: Anteil Ton, Bentonit (Gew.%) C: Anteil Kammpolymer, **KP-1** (bezogen auf Menge Gips, in Gew.%) D: Additiv, Dipropylamin E: Anteil Additiv (bezogen auf Menge Gips, in Gew.%) | | | | | | | | |

Die Ergebnisse zeigen, dass bereits geringe Mengen an Additiv von 0,05 Gew% eine signifikante Verbesserung des Flows bewirken und dass der Flow bei höherer Konzentration des Additivs weiter verbessert werden kann. Der Flow liegt bei Zusatz von 0,2 Gew.% Additiv sogar über dem Flow eines vergleichbaren Gipses ohne Tonanteil.

### Beispiele 6 - 13

Es wurden Gipsslurrys hergestellt wie oben beschrieben. Die Komponenten und die Mengenanteile sind in der Tabelle 3 angegeben. Die Ergebnisse aus Tabelle 3 sind in der Tabelle 4 dargestellt. Bei den Beispielen 6 und 7 handelt es sich um Vergleichsbeispiele.

**Tabelle 3:**

| **Bsp.** | **A Gips %** | **B Ton %** | **C KP** | **D %** | **E Additiv** | **F %** |
|---|---|---|---|---|---|---|
| 6 | 99 | 1 | **KP-1** | 0,2 | - | - |
| 7 | 99 | 1 | **KP-2** | 0,2 | - | - |
| 8 | 99 | 1 | **KP-1** | 0,2 | Lupasol G10 | 0,07 |
| 9 | 99 | 1 | **KP-2** | 0,2 | Lupasol G10 | 0,07 |
| 10 | 99 | 1 | **KP-1** | 0,2 | Diaminobutan | 0,05 |
| 11 | 99 | 1 | **KP-2** | 0,2 | Diaminobutan | 0,05 |
| 12 | 99 | 1 | **KP-1** | 0,2 | Tetrabutyl-ammoniumbromid | 0,20 |
| 13 | 99 | 1 | **KP-2** | 0,2 | Tetrabutyl-ammoniumbromid | 0,20 |

| | | | | | | |
|---|---|---|---|---|---|---|
| A: Anteil Gips, Calciumsulfat (Gew.%) B: Anteil Ton, Bentonit (Gew.%) C: Kammpolymer D: Anteil Kammpolymer, **KP** (bezogen auf Menge Gips, in Gew.%) E: Additiv F: Anteil Additiv (bezogen auf Menge Gips, in Gew.%) | | | | | | |

**Tabelle 4:**

| **Bsp** | **Flow [mm]** | **VB [min]** | **VE [min]** |
|---|---|---|---|
| 6 | 140 | 3:15 | 9:21 |
| 7 | 140 | 2:45 | 8:10 |
| 8 | 204 | 4:45 | 12:25 |
| 9 | 193 | 4.18 | 9:50 |
| 10 | 208 | 8:10 | 17:40 |
| 11 | 189 | 5:40 | 12:20 |
| 12 | 209 | 5:10 | 12:20 |
| 13 | 193 | 4:10 | 11:30 |

Die Ergebnisse zeigen, dass mit den Additiven der Erfindung Flow und Verarbeitungszeit deutlich verbessert werden können. Weiter wurden in den Beispielen 6 bis 13 zwei verschiedene Kammpolymere benutzt. Bei **KP-1** handelt es sich um ein Kammpolymer der Formel (I), dessen R in Formel (I) für Wasserstoff steht. Bei **KP-2** handelt es sich um ein Kammpolymer der Formel (I), dessen R in Formel (I) für Methyl steht.

Die Ergebnisse zeigen, dass mit den Additiven der Erfindung im Falle von **KP-1,** gegenüber **KP-2**, eine stärkere Verbesserung des Flow und Verarbeitungszeit erreicht wird.

### Beispiele 14 - 25

Es wurden erfindungsgemäße Gipsslurrys mit verschiedenen Arten und Anteilen von Polyetheraminen als Additiv hergestellt und die Eigenschaften gemessen. Die Komponenten und die Mengenanteile sind in der Tabelle 5 angegeben. Die Ergebnisse aus Tabelle 5 sind in der Tabelle 6 dargestellt. Bei den Beispielen 14 und 15 handelt es sich um Vergleichsbeispiele.

**Tabelle 5:**

| **Bsp.** | **A Gips %** | **B Ton %** | **C KP** | **D %** | **E Additiv** | **F %** |
|---|---|---|---|---|---|---|
| 14 | 100 | - | **KP-1** | 0,2 | - | - |
| 15 | 99 | 1 | **KP-1** | 0,2 | - | - |
| 16 | 99 | 1 | **KP-1** | 0,2 | Jeffamine M-600 | 0.20 |
| 17 | 99 | 1 | **KP1** | 0,2 | Jeffamine M-600 | 0.10 |
| 18 | 99 | 1 | **KP-1** | 0,2 | Jeffamine M-2005 | 0.20 |
| 19 | 99 | 1 | **KP-1** | 0,2 | Jeffamine M-2005 | 0.10 |
| 20 | 99 | 1 | **KP-1** | 0,2 | Jeffamine M-2070 | 0.20 |
| 21 | 99 | 1 | **KP-1** | 0,2 | Jeffamine M-2070 | 0.45 |
| 22 | 99 | 1 | **KP1** | 0,2 | Jeffamine ED-2003 | 0.40 |
| 23 | 99 | 1 | **KP-1** | 0,2 | Jeffamine ED-2003 | 0.20 |
| 24 | 99 | 1 | **KP-1** | 0,2 | Jeffamine D-230 | 0.10 |
| 25 | 99 | 1 | **KP-1** | 0,2 | Jeffamine D-230 | 0.05 |

| | | | | | | |
|---|---|---|---|---|---|---|
| A: Anteil Gips, Calciumsulfat (Gew.%) B: Anteil Ton, Bentonit (Gew.%) C: Kammpolymer D: Anteil Kammpolymer **KP-1** (bezogen auf Menge Gips, in Gew.%) E: Additiv F: Anteil Additiv (bezogen auf Menge Gips, in Gew.%) | | | | | | |

**Tabelle 6:**

| **Bsp** | **Flow [mm]** | **VB [min]** | **VE [min]** |
|---|---|---|---|
| 14 | 200 | 04:50 | 12:20 |
| 15 | 122 | 2:50 | 9:15 |
| 16 | 204 | 4:41 | 11.25 |
| 17 | 187 | 4.20 | 11:20 |
| 18 | 208 | 4:25 | 11:40 |
| 19 | 186 | 3:51 | 10:30 |
| 20 | 170 | 4:43 | 11:25 |
| 21 | 212 | 4:52 | 11:25 |
| 22 | 199 | 5:10 | 14:25 |
| 23 | 159 | 3:45 | 10:30 |
| 24 | 222 | 7:00 | 14:50 |
| 25 | 200 | 5:00 | 13:37 |

Die Ergebnisse zeigen, dass bereits geringe Mengen an Polyetheraminen als Additiv von 0,05 Gew% eine signifikante Verbesserung des Flows bewirken und dass der Flow bei höherer Konzentration des Additivs weiter verbessert werden kann. Der Flow entspricht bei Zusatz von 0,05 Gew.% Additiv in Beispiel 25 sogar dem Flow eines vergleichbaren Gipses ohne Tonanteil (Beispiel 14).

## Patentansprüche

1. Verwendung eines Additivs, das ausgewählt ist aus primären, sekundären und tertiären Alkylaminen und quartären Alkylammoniumverbindungen, die gegebenenfalls jeweils mindestens eine Hydroxygruppe und/oder Ethergruppe aufweisen, zur Verbesserung der Verarbeitbarkeit von tonhaltigen Gipszusammensetzungen, die mindestens ein Kammpolymer enthalten, das über Ester-, Amid- und/oder Ethergruppen an eine Hauptkette angebundene Seitenketten aufweist.

2. Verwendung nach Anspruch 1, wobei die Alkylamine Monoamine, Diamine oder Triamine sind.

3. Verwendung nach mindestens einem der vorhergehenden Ansprüche, wobei die Alkylamine ausgewählt sind aus
R₁-NH₂, R2-NH-R2' und NH₂-R3-NH₂,
wobei R1, R2 und R2' unabhängig voneinander Alkylreste mit 1 bis 200 C-Atomen sind, und
R3 ein Alkylrest mit 1 bis 150 C-Atomen ist.

4. Verwendung nach mindestens einem der vorhergehenden Ansprüche, wobei
R1, R2 und R2' unabhängig voneinander Alkylreste mit 30 bis 150 C-Atomen sind, und
R3 ein Alkylrest mit 20 bis 120 C-Atomen ist.

5. Verwendung nach mindestens einem der vorhergehenden Ansprüche, wobei es sich bei den Alkylaminen um Polyetheramine, insbesondere Polyethermonoamine oder Polyetherdiamine, handelt.

6. Verwendung nach mindestens einem der vorhergehenden Ansprüche, wobei das Kammpolymer ein Copolymer von Vinylether oder Allylether mit mindestens einem Comonomer, welches ausgewählt ist aus der Gruppe bestehend aus Maleinsäureanhydrid, Maleinsäure, Methacrylsäure, Acrylsäure, Methacrylamid und Acrylamid, ist, vorzugsweise ein Copolymer von Vinylether mit einem Comonomer, welches ausgewählt ist aus der Gruppe bestehend aus Maleinsäureanhydrid, Maleinsäure, Acrylsäure und Acrylamid.

7. Verwendung nach Anspruch 6, wobei das Kammpolymer ein Copolymer von Vinylether mit mindestens einem Comonomer ist und das Molverhältnis von Vinylether zu Comonomer ein Verhältnis von 1 - 10 zu 1 aufweist.

8. Verwendung nach einem der Ansprüche 1 - 5, wobei das Kammpolymer ein Copolymer der Formel (I) ist 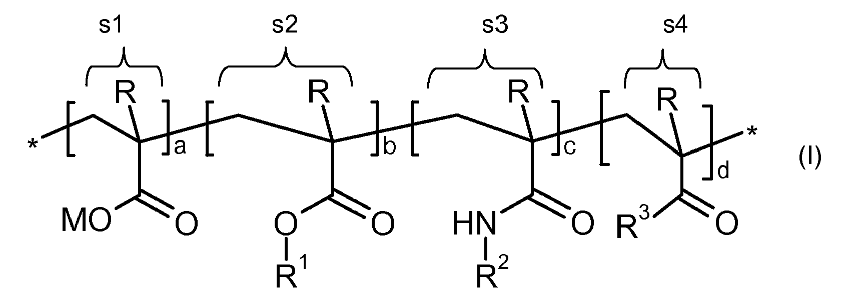 wobei
M unabhängig voneinander für H, Alkalimetallion, Erdalkalimetallion, zwei- oder dreiwertiges Metallion, Ammoniumion oder organische Ammoniumgruppe steht;
R je unabhängig voneinander von den anderen Resten R in Formel (I) für Wasserstoff oder für eine Methylgruppe steht;
R¹ unabhängig voneinander für -[AO]_{q}-R⁴ steht;
R² unabhängig voneinander für eine Alkylgruppe, Cycloalkylgruppe oder Alkylarylgruppe mit 1-20 C-Atomen oder für - [AO]_{q}-R⁴ steht,
wobei A für eine C₂- bis C₄-Alkylengruppe und R⁴ für eine C₁- bis C₂₀-Alkylgruppe, -Cyclohexylgruppe oder -Alkylarylgruppe steht;
und q = 2 - 250;
R³ unabhängig voneinander für -NH₂, -NR⁵R⁶ oder -OR⁷NR⁸R⁹ steht,
wobei R⁵ und R⁶ unabhängig voneinander
für eine C₁- bis C₂₀-Alkylgruppe, -Cycloalkylgruppe oder -Alkylarylgruppe oder -Arylgruppe steht;
oder
für eine Hydroxyalkylgruppe steht,
oder für eine Acetoxyethyl- oder eine Hydroxy-isopropyl- oder eine Acetoxyisopropylgruppe steht,
oder R⁵ und R⁶ zusammen einen Ring bilden, von dem der Stickstoff ein Teil ist, um einen Morpholin- oder Imidazolinring aufbauen;
wobei R⁷ für eine C₂-C₄- Alkylengruppe steht;
und R⁸ und R⁹ je unabhängig voneinander für eine C₁- bis C₂₀-Alkylgruppe, -Cycloalkylgruppe, -Alkylarylgruppe, -Arylgruppe oder für eine Hydroxyalkylgruppe steht
und wobei a, b, c und d Molverhältnisse der Struktureinheiten s1, s2, s3 und s4 darstellen
und a/b/c/d = (0.1 - 0.9) / (0.1 - 0.9) / (0 - 0.8) / (0 - 0.3) mit der Massgabe, dass a + b + c + d = 1 ist.

9. Verwendung nach Anspruch 8, wobei R in Formel (I) für Wasserstoff steht.

10. Verwendung nach Anspruch 8 oder 9, wobei in Formel (I) das Verhältnis a/(b+c+d) = 1 - 10, insbesondere 3 - 8, beträgt.

11. Tonhaltige Gipszusammensetzung, enthaltend
(a) mindestens ein Kammpolymer, wie es in einem der vorhergehenden Ansprüche beschreiben ist,
(b) mindestens ein Additiv, wie es in einem der vorhergehenden Ansprüche beschreiben ist, und
(c) tonhaltigen Gips.

12. Tonhaltige Gipszusammensetzung nach Anspruch 11, enthaltend
(a) 0,1 bis 5 Gew.% Kammpolymer,
(b) 0,01 bis 2 Gew.% Additiv,
(c) 15 bis 99,5 Gew.% tonhaltigen Gips.

13. Dispergiermittel für eine tonhaltige Gipszusammensetzung, enthaltend
(a) mindestens ein Kammpolymer, wie es in einem der vorhergehenden Ansprüche beschreiben ist und
(b) mindestens ein Additiv, wie es in einem der vorhergehenden Ansprüche beschreiben ist.

14. Dispergiermittel nach Anspruch 13, enthaltend
(a) 1 bis 95 Gew.% Kammpolymer,
(b) 0,5 bis 60 Gew.% Additiv und
(d) 0 bis 95 Gew.% Wasser.

15. Verwendung eines Dispergiermittels nach einem der Ansprüche 13 oder 14 zur Verbesserung der Verarbeitbarkeit von tonhaltigen Gipszusammensetzungen.
